(19) Europäisches Patentamt

European Patent Office

Office européen des brevets

(11) **EP 1 727 382 A1**

(12) **EUROPEAN PATENT APPLICATION**
published in accordance with Art. 158(3) EPC

(43) Date of publication:
**29.11.2006 Bulletin 2006/48**

(51) Int Cl.:
***H04Q 7/38*** *(2006.01)*

(21) Application number: **04715470.3**

(22) Date of filing: **27.02.2004**

(86) International application number:
**PCT/JP2004/002366**

(87) International publication number:
**WO 2005/084066 (09.09.2005 Gazette 2005/36)**

(84) Designated Contracting States:
**DE FR GB**

(71) Applicant: **MITSUBISHI DENKI KABUSHIKI KAISHA**
**Tokyo 100-8310 (JP)**

(72) Inventors:
• **TAKANO, Michiaki, c/o Mitsubishi Denki K.K.**
**Tokyo 1008310 (JP)**

• **FUKUI, Noriyuki, c/o Mitsubishi Denki K.K.**
**Tokyo 1008310 (JP)**
• **WAKABAYASHI, Hideji, c/o Mitsubishi Denki K.K.**
**Tokyo 1008310 (JP)**
• **NIWANO, Kazuhito, c/o Mitsubishi Denki K.K.**
**Tokyo 1008310 (JP)**

(74) Representative: **Zech, Stefan Markus et al**
**Meissner, Bolte & Partner**
**Widenmayerstrasse 48**
**80538 München (DE)**

(54) **SCHEDULER, BASE STATION, AND SCHEDULING METHOD**

(57) A scheduling method of the present invention includes a wireless resource allocation step of allocating wireless resources to all or a part of mobile stations in a cell, based on handover information (TRUE, FALSE) in a unit of mobile station indicating, for example, whether handover is being performed. As one example of processing at this wireless resource allocation step, a scheduler (12) executes wireless resource allocation with respect to mobile stations, in which the handover information indicates "a state of not performing handover (FALSE)".

**FIG.1**

**Description**

TECHNICAL FIELD

The present invention relates to a scheduler that controls radio resources, and more particularly, to a scheduler that adaptively allocates radio resources according to a communication environment, a base station employing the scheduler, and a scheduling method.

BACKGROUND ART

A conventional scheduler is explained below.

In a radio communication system, it is required to increase a system capacity (the number of users that can be accommodated in the system) by effectively using limited radio resources. Particularly, in a radio environment, channel quality is different for each user, and dynamically changes. Therefore, a packet scheduler that controls the radio resources according to the channel quality largely affects the Quality-of-Service (QoS) and the system capacity. Generally, in the radio communication system, therefore, the radio resources are adaptively controlled based on the channel quality and the quality of service required.

For example, as a conventional scheduler that controls the radio resources, a packet scheduler when high-speed downlink packet access (HSDPA) specified in, for example, 3 GPP is assumed, has been proposed (see Nonpatent Literatures 1 and 2). In the Nonpatent Literature 1, a technique that relates to a Carrier to Interference ratio (C/I) scheduler and a round robin scheduler as the packet scheduler is described. In the Nonpatent Literature 2, it is described that a scheduler function is shifted from a radio network controller (RNC) to a base station (NodeB).

In a radio communication system using the techniques in the above literatures, when the C/I scheduler is used, for example, the NodeB controls the radio resources (number of transport blocks, modulation methods, number of codes, and the like) based on a value of channel quality indicator (CQI) corresponding to the C/I transmitted from a mobile station (UE) at a predetermined timing and transmission data amount (data amount accumulated in a transmission buffer for each UE). Specifically, for example, the NodeB rearranges priority of the UE's that accumulate predetermined amount or more of transmission data in decreasing order of sizes of CQI, and perform radio resource allocation control in order of priority. When the CQI is the same, the priority is determined at random. The NodeB allocates the transmission data, using the data amount according to the CQI as an upper limit. When the radio resources are not sufficient, the radio resource allocation control is not performed with respect to UE's having low priority.

Nonpatent Literature 1: 3GPP TR25.848 V4.0.0 (2001-03) A.3.5 Packet scheduler.

Nonpatent Literature 2: 3GPP TS25.308 V5.4.0 (2003-03) 6.2.3 Details of MAC-hs.

However, in the conventional scheduler, since the priority of each UE in a cell is determined based on the CQI, for example, the priority of a UE (for example, a UE present near the NodeB), which should be set high originally, can be set lower than the priority of a UE present near a boundary of area coverage of the cell (as one example, a UE that requires handover or the like), because the quality thereof is temporarily degraded due to an obstacle or the like. In this case, although there is a high possibility that the quality will be recovered soon, the radio resources are allocated preferentially to the UE present near the boundary of the area coverage of the cell, and the radio resources may not be allocated to the UE present near the NodeB.

The present invention has been achieved to solve the above problems. It is an object of the invention to provide a scheduler that can adaptively control the radio resources, according to the dynamically changing radio environment, and particularly, taking into consideration that there can be a UE whose quality is temporarily degraded.

DISCLOSURE OF INVENTION

A scheduler according to one aspect of the present invention, which allocates radio resources to mobile stations in a cell in a base station, allocates the radio resource to all or a part of the mobile stations in the cell, based on handover information for each mobile station indicating whether handover is being performed.

According to the present invention, the radio resource allocation control is performed even with respect to a mobile station whose quality is temporarily degraded. Consequently, the radio resources can be used effectively and throughput is increased as a result.

BRIEF DESCRIPTION OF DRAWINGS

Fig. 1 is a configuration diagram of a base station including a scheduler according to the present invention;

Fig. 2 is a flowchart of a scheduling method according to a first embodiment of the present invention;
Fig. 3 is a flowchart of a scheduling method according to a second embodiment of the present invention;
Fig. 4 is a flowchart of a scheduling method according to a third embodiment of the present invention;
Fig. 5 is a flowchart of a scheduling method according to a fourth embodiment of the present invention;
Fig. 6 is a flowchart of a scheduling method according to a fifth embodiment of the present invention;
Fig. 7 is a flowchart of a scheduling method according to a sixth embodiment of the present invention;
Fig. 8 is a flowchart of a scheduling method according to a seventh embodiment of the present invention;
Fig. 9 is a flowchart of a scheduling method according to an eighth embodiment of the present invention;
Fig. 10 is a flowchart of a scheduling method according to a ninth embodiment of the present invention;
Fig. 11 is a flowchart of a scheduling method according to a tenth embodiment of the present invention; and
Fig. 12 is a flowchart of a scheduling method according to an eleventh embodiment of the present invention.

BEST MODE(S) FOR CARRYING OUT THE INVENTION

Exemplary embodiments of a scheduler, a base station, and a scheduling method according to the present invention will be explained in detail below with reference to the accompanying drawings. The invention is not limited to the embodiments.

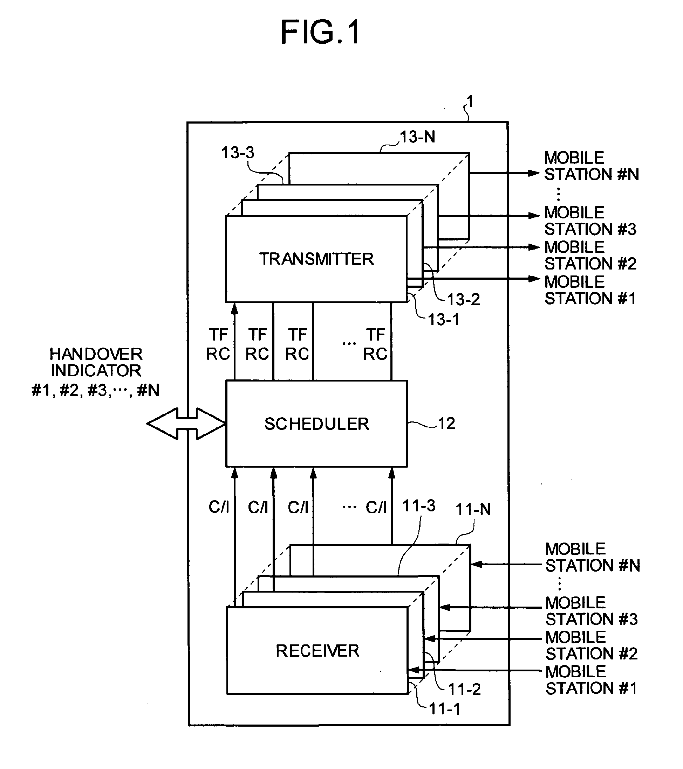

A scheduler and a scheduling method according to a first embodiment of the present invention are explained first. Fig. 1 is a configuration diagram of a base station (NodeB) including the scheduler according to the present invention. A base station 1 includes receivers 11-1, 11-2, 11-3, ..., and 11-N that receive channel quality information (CQI) such as C/I (instant C/I) respectively from mobile stations (UE) #1 to #N, and output information (corresponding to the instant C/I and average C/I) required for a radio resource allocation control, a scheduler 12 that controls allocation of radio resources based on handover information or the like transmitted from a radio network controller (RNC), and transmitters 13-1, 13-2, 13-3, ..., and 13-N that allocate the radio resources under control of the scheduler 12. The instant C/I indicates information transmitted from the mobile station at a time, and the average C/I indicates information after performing balancing processing of the instant C/I is performed in the base station.

The handover information is defined in "3GPP TSG-Ran WG1 #11 NYC, USA, 25-29 August, 2003 Tdoc R1-030902, Title: LS on NodeB behavior during subsequent RL synchronization" as a handover indicator, and is information for finding whether information is being transmitted, that is, being handed over from a network to the NodeB. Transport Format Resource Combination (TFRC) in Fig. 1 indicates a transport block size, a modulation method, and the number of codes.

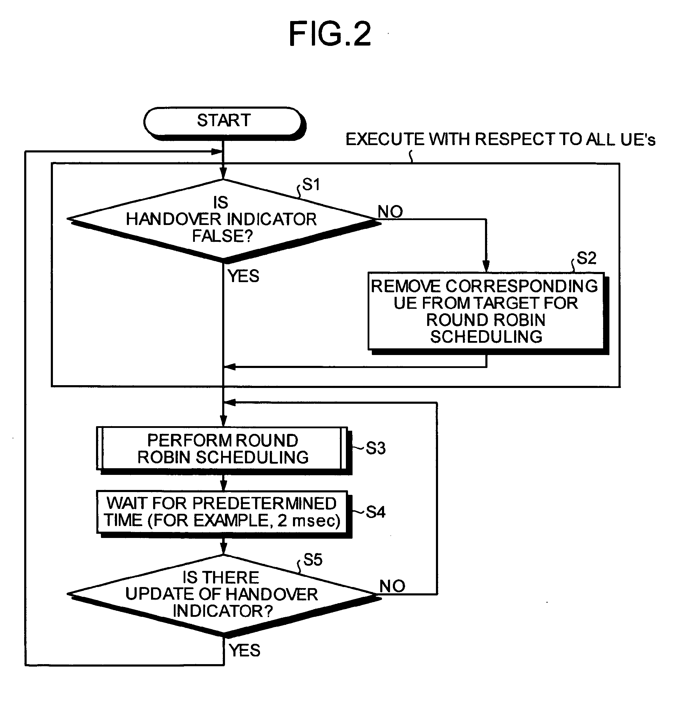

The scheduling method according to the present embodiment is explained in detail with reference to the drawings. Fig. 2 is a flowchart of the scheduling method according to the first embodiment. According to the first embodiment, an example where a handover indicator is applied to the round robin scheduling method in which one resource is used is explained.

In the base station 1, the scheduler 12 monitors handover indicators #1 to #N corresponding to the mobile stations #1 to #N in the cell (step S1), and when there is a handover indicator of, for example, "TRUE (in the middle of performing handover)" ("No" at step S1), removes the corresponding mobile station from target mobile stations for scheduling (step S2).

The scheduler 12 executes the scheduling according to the round robin method (hereinafter, "round robin scheduling") (step S3), with respect to all mobile stations having the handover indicator "FALSE (handover is not being performed)" ("Yes" at step S1).

For example, when it is assumed that the number of mobile stations in which the handover indicator indicates "FALSE" is P, and identifiers 1 to P are separately allocated to the respective mobile stations, the scheduler 12 performs the radio resource allocation control with respect to the mobile station with the identifier "1" (at this time, when there is no data to be transmitted in the mobile station with the identifier "1", the scheduler 12 does not perform the radio resource allocation control with respect to this mobile station and performs radio resource allocation control with respect to the mobile station with the identifier "2"). The scheduler 12 continuously executes the same operation (round robin scheduling) with respect to the mobile stations having the identifiers "2", "3", ..., until predetermined radio resources are consumed, and performs the radio resource allocation control with respect to, for example, K mobile stations ($1 \leq K \leq P$) among the P mobile stations (step S3).

After predetermined time (for example, 2 milliseconds) has passed since start of the round robin scheduling (step S4), the scheduler 12 confirms whether the handover indicator has been updated (step S5). For example, when the handover indicator has not been updated at step S5 ("No" at step S5), the scheduler executes step S3 again in order from the mobile station having an identifier "K+1", and performs the radio resource allocation control until the predetermined radio resources are consumed. On the other hand, when the handover indicator has been updated ("Yes" at step S5), the scheduler 12 does not perform the radio resource allocation control with respect to the mobile station with the identifier "K+1", and executes the processing from step S1 again. Update of the handover indicator is periodically

3

performed independently of the round robin scheduling (step S3). A new identifier (P+1, P+2, ...) is allocated to a mobile station in which the handover indicator newly turns to "FALSE", and a mobile station in which the handover indicator newly turns to "TRUE" is removed from the scheduling targets.

Thus, in the round robin scheduling, the radio resource allocation control is sequentially performed with respect to the respective mobile stations. Once the allocation control is performed, the respective mobile stations do not have a chance to be allocated until the next turn comes around. That is, fair scheduling is performed with respect to all target mobile stations. When 15-code radio resources are assumed as the predetermined radio resources, and for example, the mobile station with the identifier "1" is allocated with 7 codes, the mobile station with the identifier "2" is allocated with 5 codes, and the mobile station with the identifier "3" is allocated with 3 codes (the total number of codes is 15), the scheduler 12 performs the radio resource allocation control with respect to the mobile stations having the identifiers "4" or more next time or after (for example, after 2 milliseconds).

According to the present embodiment, the round robin scheduling (radio resource allocation control) is performed with respect to the mobile stations, which are not performing handover. As a result, the radio resource allocation control is not performed with respect to the mobile station in the middle of performing the handover, and hence, the radio resource allocation control can be performed reliably also with respect to a mobile station whose quality is temporarily degraded. That is, the radio resources can be effectively used, thereby increasing the throughput.

According to the first embodiment, the C/I can be used as a restriction for radio resource allocation. In this case, it is assumed that the C/I does not affect the priority (the order of allocation) of the mobile stations as the scheduling targets.

A scheduler and a scheduling method according to a second embodiment of the present invention are explained next. Since the configuration of this scheduler is the same as that shown in Fig. 1 according to the first embodiment, like reference signs denote like parts and explanation thereof is omitted.

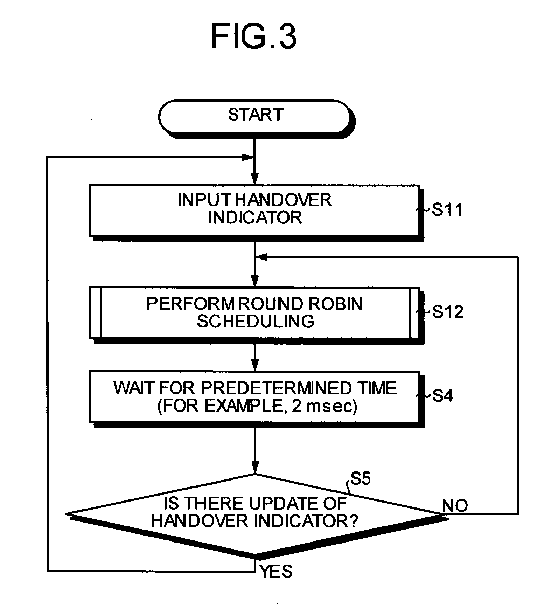

The scheduling method according to the second embodiment is explained in detail with reference to the drawing. Fig. 3 is a flowchart of the scheduling method according to the second embodiment. According to the second embodiment, an example where the priority is set by the handover indicator in the scheduling method according to the first embodiment is explained. Only processing different from that according to the first embodiment is explained.

In the base station 1, the scheduler 12 monitors the handover indicators corresponding to the respective mobile stations #1 to #N in the cell (step S11).

The scheduler 12 performs the round robin scheduling based on the handover indicators corresponding to the respective mobile stations (step S12). Specifically, in the scheduler 12, when the number of the mobile stations having the handover indicator "FALSE" is P, it is assumed that the identifiers of the respective mobile stations are 1, 2, ..., and P. On the other hand, when the number of the mobile stations having the handover indicator "TRUE" is Q, it is assumed that the identifiers of the respective mobile stations are P+1, P+2, ..., and N (N=P+Q). The radio resource allocation control is started from the mobile station with the identifier "1" (at this time, when there is no data to be transmitted in the mobile station with the identifier "1", the radio resource allocation control is not performed with respect to this mobile station, and the radio resource allocation control is started from the mobile station with the identifier "2"). The scheduler 12 executes the same operation (round robin scheduling) continuously with respect to the mobile stations with the identifiers "2", "3", ... until the predetermined radio resources are consumed. In this example, the radio resource allocation control is performed with respect to, for example, K mobile stations (1≤K≤N) among the N mobile stations (step S12).

The condition for K can be 1≤K<P, or can be P≤K≤N. Therefore, when K satisfies 1≤K<P, the next round robin scheduling is resumed ("No" at step S5) from a mobile station having the handover indicator "FALSE" (corresponding to a mobile station having identifier "K+1"). On the other hand, when K satisfies P≤K≤N, the next round robin scheduling is resumed ("No" at step S5) from a mobile station having the handover indicator "TRUE" (corresponding to a mobile station having identifier "K+1"). According to the second embodiment, update of the handover indicator is periodically performed independently of the round robin scheduling (step S12), as according to the first embodiment. However, in this periodic update, when there is no mobile station to be removed from the scheduling targets, a new identifier is allocated to a mobile station in which the handover indicator newly becomes "FALSE" and to a mobile station in which the handover indicator newly becomes "TRUE". At this time, identifiers "P+1", "P+2", ... are allocated to the mobile stations in which the handover indicator newly becomes "FALSE", and an identifier following the identifier of the mobile station having the handover indicator "FALSE" is allocated to the mobile station having the handover indicator "TRUE".

According to the second embodiment, therefore, the priority is set to each mobile station corresponding to the content of the handover indicator.

According to the second embodiment, after the round robin scheduling is performed with respect to the mobile stations, which are not performing handover, the round robin scheduling is performed with respect to the mobile stations in the middle of performing handover. As a result, the priority can be set according to the handover indicator, and the radio resource allocation control is performed preferentially also to the mobile stations whose quality is temporarily degraded. In other words, the radio resources can be effectively used, while maintaining equity with respect to all mobile stations, thereby increasing the throughput.

A scheduler and a scheduling method in a third embodiment of the present invention are explained next. Since the configuration of this scheduler is the same as that shown in Fig. 1 according to the first embodiment, like reference signs denote like parts and explanation thereof is omitted.

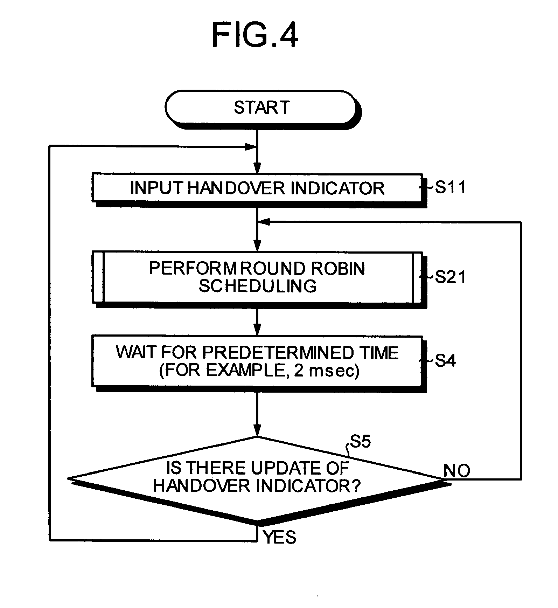

The scheduling method according to the third embodiment is explained in detail with reference to the drawing. Fig. 4 is a flowchart of the scheduling method according to the third embodiment. According to the third embodiment, an example where the priority is set by the handover indicator in the scheduling method according to the first embodiment is explained. Only processing different from that in the first and the second embodiments is explained.

The scheduler 12 according to the third embodiment performs the round robin scheduling based on the handover indicator corresponding to the respective mobile stations, according to a standard different from the second embodiment (step S21). Specifically, in the scheduler 12, when the number of the mobile stations having the handover indicator "FALSE" is P, it is assumed that the identifiers of the respective mobile stations are 1, 2, ..., and P. On the other hand, when the number of the mobile stations having the handover indicator "TRUE" is Q, it is assumed that the identifiers of the respective mobile stations are P+1, P+2, ..., and N (N=P+Q). The radio resource allocation control is started from the mobile station with the identifier "1" (at this time, when there is no data to be transmitted in the mobile station with the identifier "1", the radio resource allocation control is not performed with respect to this mobile station, and the radio resource allocation control is started from the mobile station with the identifier "2"). The scheduler 12 executes the same operation (round robin scheduling) continuously with respect to the mobile stations with the identifiers "2", "3", ... until the predetermined radio resources are consumed. In this example, the radio resource allocation control is performed with respect to, for example, K ($1 \leq K \leq N$) mobile stations among the N mobile stations (step S21).

A condition for K can be $1 \leq K < P$ or $P \leq K \leq N$. However, when K satisfies $P \leq K \leq N$, the next round robin scheduling is resumed ("No" at step S5) from the mobile station with the identifier "1", in which the handover indicator is "FALSE", and when K satisfies $1 \leq K < P$, the next round robin scheduling is resumed ("No" at step S5) from the mobile station with the identifier "K+1", in which the handover indicator is "FALSE". When the next round robin scheduling is to be resumed from the mobile station, in which the handover indicator is "FALSE", the radio resource allocation control is performed with respect to the mobile station with the identifier "1" when the radio resource allocation control with respect to the mobile station with the identifier "P" has finished. Then, the next and subsequent round robin scheduling ("No" at step S5) are executed only with respect to the mobile stations having the handover indicator "FALSE".

That is, the radio resource allocation control with respect to the mobile station having the handover indicator "TRUE" is executed only at the time of the first round robin scheduling to be executed after step S11. Furthermore, even at the time of the first round robin scheduling, the radio resource allocation control with respect to the mobile station having the handover indicator "TRUE" is executed only when the radio resources are left at a point in time when the radio resource allocation control with respect to the mobile stations having the handover indicator "FALSE" has finished. However, when there is no mobile station having the handover indicator "FALSE", the round robin scheduling is performed with respect to the mobile station having the handover indicator "TRUE".

Thus, according to the third embodiment, the priority different from that according to the second embodiment is set based on the content of the handover indicator.

According to the third embodiment, the round robin scheduling is performed basically with respect to the mobile stations, which are not performing handover. However, when there is no mobile station, which are not performing handover, or when the radio resources are left at a point in time when the radio resource allocation control with respect to all the mobile stations, which are not performing handover, has finished, the round robin scheduling is performed with respect to the mobile stations in the middle of performing handover. As a result, the priority can be set according to the handover indicator, and the radio resource allocation control is performed preferentially even with respect to the mobile station whose quality is temporarily degraded. That is, the radio resources can be used effectively, thereby increasing the throughput.

A scheduler and a scheduling method in a fourth embodiment of the present invention are explained. Since the configuration of this scheduler is the same as that shown in Fig. 1 according to the first embodiment, like reference signs denote like parts and explanation thereof is omitted.

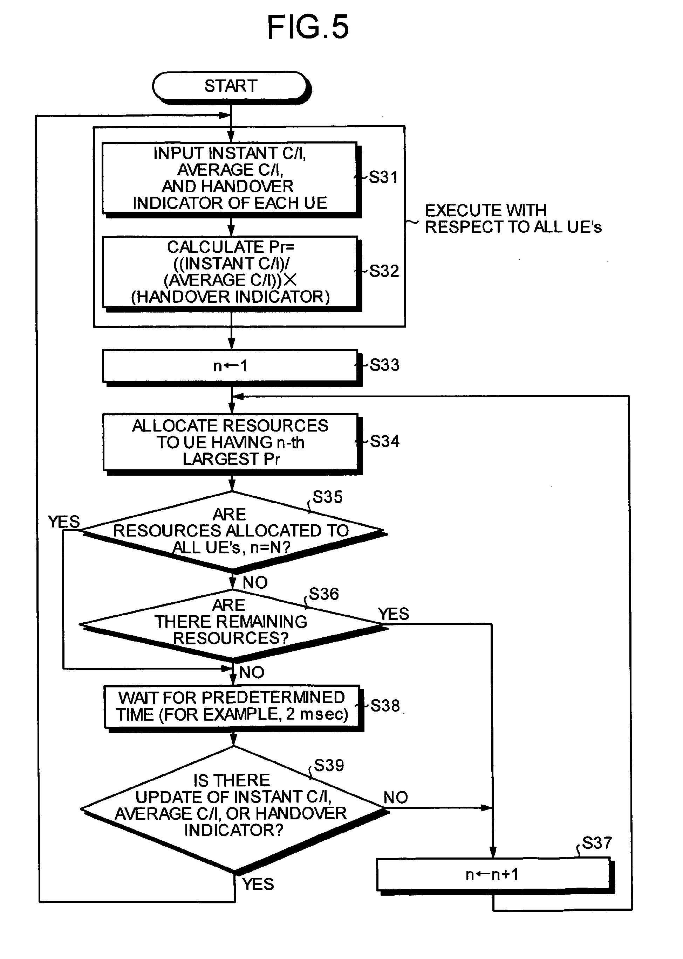

The scheduling method according to the fourth embodiment is explained in detail with reference to the drawing. Fig. 5 is a flowchart of the scheduling method according to the fourth embodiment. In this embodiment, the receivers 11-1 to 11-N receive the instant C/I (for example, 2 milliseconds/once) from the mobile stations #1 to #N corresponding to the respective receivers, and calculate the average C/I (for example, the average of instant C/I received in the last 20 milliseconds) by using the past instant C/I.

In the base station 1, the scheduler 12 periodically receives the instant C/I and the average C/I respectively from the receivers #1 to #N (step S31), and receives the handover indicator for each mobile station from the RNC (step S31).

The scheduler 12 then calculates the priority (Pr) for each mobile station based on Equation (1) below (step S32). When the handover indicator is "FALSE (not performing handover)", "1" is substituted for the handover indicator in Equation (1), and when the handover indicator is "TRUE (in the middle of performing handover)", "0" is substituted for the handover indicator. That is, according to the fourth embodiment, the mobile stations in the middle of performing handover are excluded from the radio resource allocation targets.

For example, when "instant C/I>average C/I", it can be considered that the mobile station is approaching the base station 1, and as the difference increases, the mobile station is approaching the base station 1 at a higher speed. On the other hand, when "instant C/I<average C/I", it can be considered that the mobile station is moving away from the base station 1, and as the difference increases, the mobile station is moving away from the base station 1 at a higher speed. According to the fourth embodiment, therefore, the priority for the radio resource allocation control is set high in an order of the mobile station having a larger value of (instant C/I)/(average C/I) (corresponding to a proportional fairness scheduler).

$$Pr=((instant\ C/I)/(average\ C/I))\times(handover\ indicator) \qquad (1)$$

Thereafter, the scheduler 12 performs the radio resource allocation control in order of high priority (Pr). Specifically, for example, when the number of mobile stations having the handover indicator "FALSE" is N, the scheduler 12 performs the radio resource allocation control with respect to the mobile station having the highest priority (n=1) (steps S33 and S34) (when there is no data to be transmitted in the mobile station having the highest priority, the radio resource allocation control is not performed with respect to this mobile station, and the radio resource allocation control is performed with respect to the mobile station having the next highest priority (n=2)). Hereafter, the scheduler 12 sequentially performs the radio resource allocation control with respect to the mobile stations having the second highest priority (n=2), the third highest priority (n=3), ... (step S34, "No" at S35, "Yes" at S36, and S37), until the radio resource allocation control with respect to the mobile station, for example, having the lowest priority (n=N) has finished ("Yes" at step S35), or until the predetermined radio resources are consumed ("No" at step S36).

After predetermined time (for example, 2 milliseconds) has passed since the radio resource allocation control is started with respect to the mobile station having the highest priority (n=1) (step S38), the scheduler 12 confirms whether the handover indicator, the instant C/I, or the average C/I has been updated (step S39). For example, when any one of these has not been updated ("No" at step S39), the processing from step S34 onward is executed again sequentially from the mobile station having the next highest priority ((k+1)th) with respect to the mobile station (k-th: 1≤k<N), for which the radio resource allocation control has been completed at a point in time when the predetermined time has passed (step S37). On the other hand, at step S39, when the handover indicator, the instant C/I, or the average C/I has been updated ("Yes" at step S39), the scheduler 12 executes the processing from step S31 onward again.

That is, when 15-code radio resources are assumed as the predetermined radio resources, and, for example, the mobile station having the highest priority is allocated with 7 codes, the mobile station having the second highest priority is allocated with 5 codes, and the mobile station having the third highest priority is allocated with 3 codes (the total number of the codes is 15), the scheduler 12 performs the radio resource allocation control with respect to the mobile stations having the fourth highest priority next time or after (for example, after 2 milliseconds).

Thus, according to the fourth embodiment, the radio resource allocation control is performed with respect to the mobile stations, which are not performing handover, in order of high priority. Consequently, the radio resource allocation control is performed with respect to all mobile stations, which are not performing handover, and hence, the radio resource allocation control is reliably performed even with respect to the mobile station whose quality is temporarily degraded. That is, the radio resources can be effectively used, thereby increasing the throughput.

A scheduler and a scheduling method in a fifth embodiment of the present invention are explained next. Since the configuration of this scheduler is the same as that shown in Fig. 1 according to the first embodiment, like reference signs denote like parts and explanation thereof is omitted.

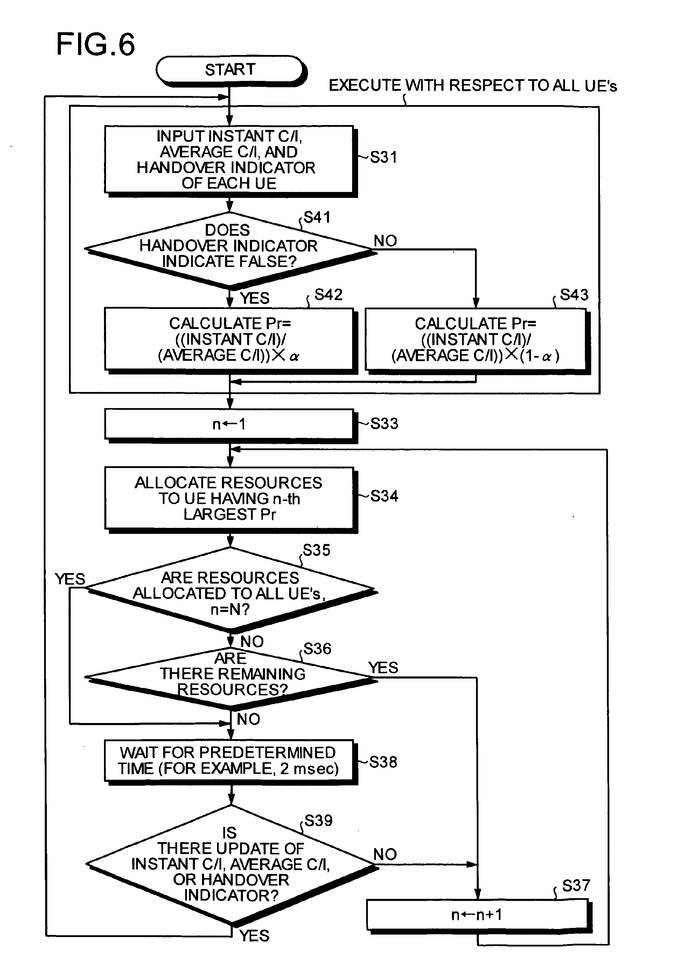

The scheduling method according to the fifth embodiment is explained in detail with reference to the drawing. Fig. 6 is a flowchart of the scheduling method according to the fifth embodiment. Only processing different from that according to the fourth embodiment is explained.

For example, the scheduler 12 confirms whether the handover indicator is "FALSE" for each mobile station, and calculates the priority (Pr) for the mobile station having the handover indicator "FALSE" ("Yes" at step S41) based on Equation (2) (step S42). On the other hand, the scheduler 12 calculates the priority (Pr) for the mobile station having the handover indicator "TRUE" ("No" at step S41) based on Equation (3) (step S43).

However, "0.8" is substituted for a in Equations (2) and (3). That is, according to the fifth embodiment, the priority is decreased with respect to the mobile stations in the middle of performing handover. The value of $\alpha$ can be a value other than "0.8", as long as it is larger than "0.5".

$$Pr=((\text{instant C/I})/(\text{average C/I}))\times\alpha \qquad\qquad (2)$$

$$Pr=((\text{instant C/I})/(\text{average C/I}))\times(1-\alpha) \qquad\qquad (3)$$

According to the fifth embodiment, the radio resource allocation control is performed with respect to all mobile stations sequentially in order of high priority, so that the priority of the mobile station, which is not performing handover is higher than the priority of the mobile station in the middle of performing handover. As a result, the priority can be set to all mobile stations, and the radio resource allocation control is reliably performed even with respect to the mobile station whose quality is temporarily degraded. That is, the radio resources can be effectively used, thereby increasing the throughput.

A scheduler and a scheduling method in a sixth embodiment of the present invention are explained next. Since the configuration of this scheduler is the same as that shown in Fig. 1 according to the first embodiment, like reference signs denote like parts and explanation thereof is omitted.

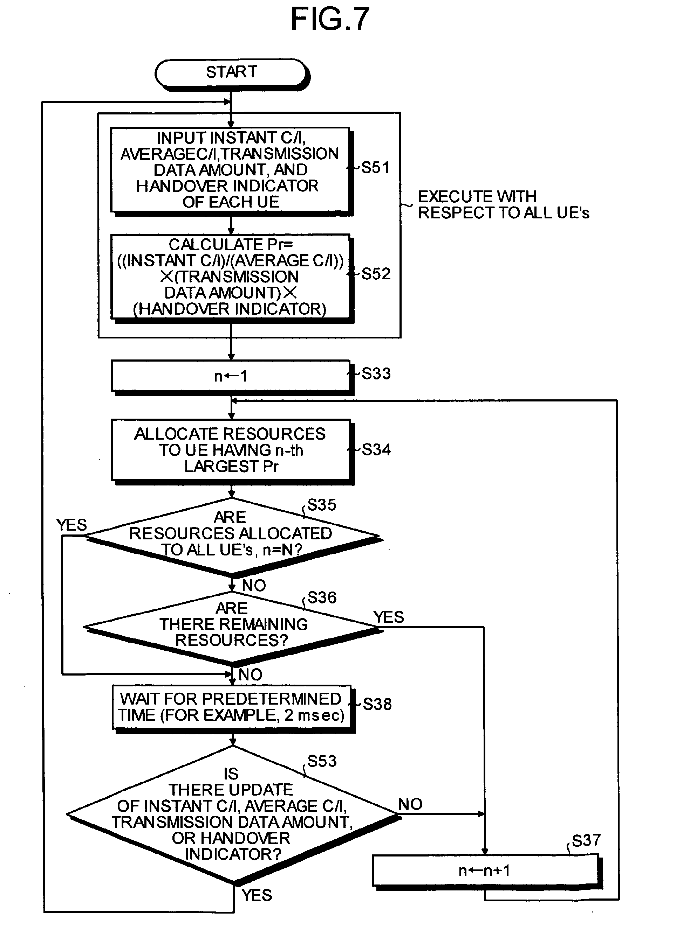

The scheduling method according to the sixth embodiment is explained in detail with reference to the drawing. Fig. 7 is a flowchart of the scheduling method according to the sixth embodiment. Only processing different from that in the fourth and the fifth embodiments is explained.

In the base station 1, the scheduler 12 periodically receives the instant C/I and the average C/I from the respective receivers #1 to #N (step S51), receives the handover indicator for each mobile station from the RNC (step S51), and receives the amount of the transmission data (transmission data amount) recorded in the transmission buffer (step S51).

The scheduler 12 calculates the priority (Pr) for each mobile station based on Equation (4) (step S52).

$$Pr=((\text{instant C/I})/(\text{average C/I}))\times(\text{transmission data amount})\times(\text{handover indicator}) \qquad\qquad (4)$$

According to the sixth embodiment, after predetermined time (for example, 2 milliseconds) has passed since the radio resource allocation control is started with respect to the mobile station having the highest priority (n=1) (step S38), the scheduler 12 confirms whether the handover indicator, the instant C/I, the average C/I, or the transmission data amount has been updated (step S53). For example, when any one of these has not been updated ("No" at step S53), the processing from step S34 onward is executed again sequentially from the mobile station having the next highest priority ((k+1)th) with respect to the mobile station (k-th: 1≤k<N), for which the radio resource allocation control has been completed at a point in time when the predetermined time has passed (step S37). On the other hand, at step S53, when the handover indicator, the instant C/I, the average C/I, or the transmission data amount has been updated ("Yes" step S53), the scheduler 12 executes the processing from step S51 and onward again.

Thus, according to the sixth embodiment, the radio resource allocation control is performed sequentially in order of high priority with respect to the mobile stations, which are not performing handover. At this time, the transmission data amount is reflected in the priority. Consequently, the radio resource allocation control is performed with respect to all the mobile stations, which are not performing handover. As a result, the radio resource allocation control is performed reliably even with respect to the mobile station whose quality is temporarily degraded. That is, the radio resources can be effectively used, thereby increasing the throughput.

A scheduler and a scheduling method in a seventh embodiment of the present invention are explained next. Since the configuration of this scheduler is the same as that shown in Fig. 1 according to the first embodiment, like reference signs denote like parts and explanation thereof is omitted.

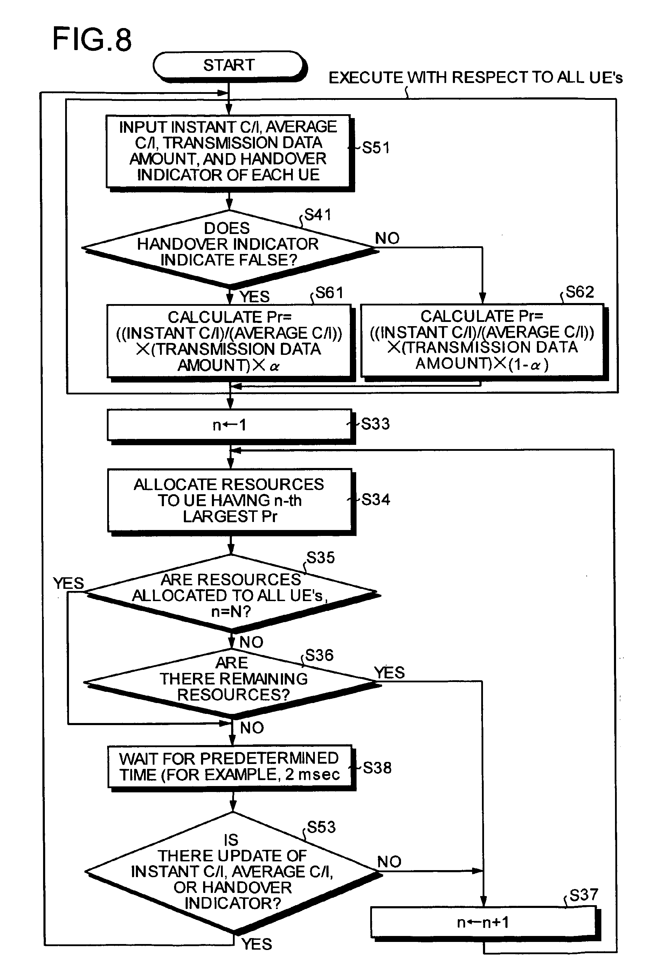

The scheduling method according to the seventh embodiment is explained in detail with reference to the drawing. Fig. 8 is a flowchart of the scheduling method according to the seventh embodiment. Only processing different from that in the fourth to the sixth embodiments is explained.

For example, the scheduler 12 confirms whether the handover indicator is "FALSE" for each mobile station, and calculates the priority (Pr) for the mobile station having the handover indicator "FALSE" ("Yes" at step S41) based on Equation (5) (step S61). On the other hand, the scheduler 12 calculates the priority (Pr) for the mobile station having the handover indicator "TRUE" ("No" at step S41) based on Equation (6) (step S62).

$$Pr=((\text{instant } C/I)/(\text{average } C/I))\times(\text{transmission data amount})\times\alpha \qquad (5)$$

$$Pr=((\text{instant } C/I)/(\text{average } C/I))\times(\text{transmission data amount})\times(1-\alpha) \qquad (6)$$

Thus, according to the seventh embodiment, the radio resource allocation control is performed with respect to all mobile stations sequentially in order of high priority, so that the priority of the mobile station, which is not performing handover, is higher than the priority of the mobile station in the middle of performing handover. However, since the transmission data amount is reflected in the priority, the priority of the mobile station in the middle of performing handover can become high. As a result, the priority can be set to all mobile stations, and the radio resource allocation control is reliably performed even with respect to the mobile station whose quality is temporarily degraded. That is, the radio resources can be effectively used, thereby increasing the throughput.

A scheduler and a scheduling method in an eighth embodiment of the present invention are explained next. Since the configuration of this scheduler is the same as that shown in Fig. 1 according to the first embodiment, like reference signs denote like parts and explanation thereof is omitted.

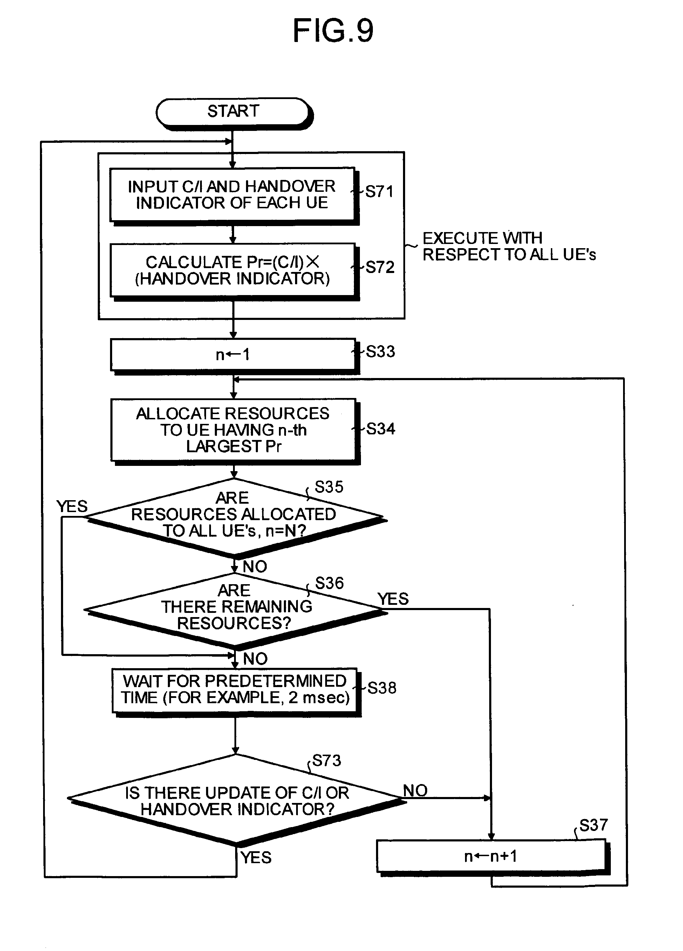

The scheduling method according to the eighth embodiment is explained in detail with reference to the drawing. Fig. 9 is a flowchart of the scheduling method according to the eighth embodiment. An example where the receivers 11-1 to 11-N receive the instant C/I (for example, 2 milliseconds/once) from the mobile stations #1 to #N corresponding to the respective receivers, and as one example, outputs the instant C/I to the scheduler 12 is explained. However, the present invention is not limited thereto, and for example, the average C/I (for example, the average of instant C/I received during the last 20 milliseconds) is calculated by using the past instant C/I, and the calculation result can be output to the scheduler 12. Only processing different from that in the fourth to the seventh embodiments is explained.

In the base station 1, the scheduler 12 periodically receives the instant C/I respectively from the receivers #1 to #N (step S71), and receives the handover indicator for each mobile station from the RNC (step S71).

The scheduler 12 then calculates the priority (Pr) for each mobile station based on Equation (7) (step S72). According to the eighth embodiment, the priority in the radio resource allocation control is set high with respect to the mobile stations in decreasing order of the size of instant C/I (corresponding to a MAXC/I scheduler).

$$Pr=(\text{instant } C/I)\times(\text{handover indicator}) \qquad (7)$$

According to the eighth embodiment, after predetermined time (for example, 2 milliseconds) has passed since the radio resource allocation control is started with respect to the mobile station having the highest priority (n=1) (step S38), the scheduler 12 confirms whether the handover indicator or the instant C/I has been updated (step S73). For example, when either one of these has not been updated ("No" at step S73), the processing from step S34 onward is executed again sequentially from the mobile station having the next highest priority ((k+1)th) with respect to the mobile station (k-th: $1\leq k<N$), for which the radio resource allocation control has been completed at a point in time when the predetermined time has passed (step S37). On the other hand, at step S73, when the handover indicator or the instant C/I has been updated ("Yes" at step S73), the scheduler 12 executes the processing from step S71 and onward again.

Thus, according to the eighth embodiment, the radio resource allocation control is performed sequentially in order of high priority with respect to the mobile stations, which are not performing handover. Consequently, the radio resource allocation control is performed with respect to all the mobile stations, which are not performing handover. As a result, the radio resource allocation control is performed reliably even with respect to the mobile station whose quality is temporarily degraded. That is, the radio resources can be effectively used, thereby increasing the throughput.

A scheduler and a scheduling method in a ninth embodiment of the present invention are explained next. Since the configuration of this scheduler is the same as that shown in Fig. 1 according to the first embodiment, like reference signs denote like parts and explanation thereof is omitted.

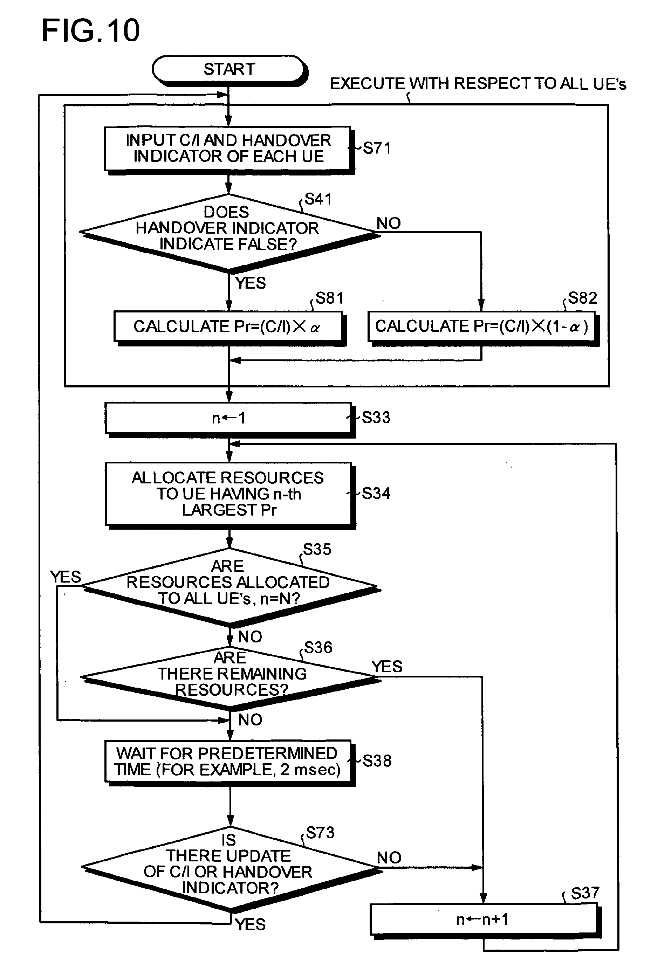

The scheduling method according to the ninth embodiment is explained in detail with reference to the drawing. Fig. 10 is a flowchart of the scheduling method according to the ninth embodiment. Only processing different from that in the fourth to the eighth embodiments is explained.

For example, the scheduler 12 confirms whether the handover indicator is "FALSE" for each mobile station, and calculates the priority (Pr) for the mobile station having the handover indicator "FALSE" ("Yes" at step S41) based on Equation (8) (step S81). On the other hand, the scheduler 12 calculates the priority (Pr) for the mobile station having the handover indicator "TRUE" ("No" at step S41) based on Equation (9) (step S82).

$$Pr=(instant~C/I)\times\alpha \qquad\qquad (8)$$

$$Pr=(instant~C/I)\times(1-\alpha) \qquad\qquad (9)$$

Thus, according to the ninth embodiment, the radio resource allocation control is performed with respect to all mobile stations sequentially in order of high priority, so that the priority of the mobile station, which is not performing handover, is higher than the priority of the mobile station in the middle of performing handover. As a result, the priority can be set to all mobile stations, and the radio resource allocation control is reliably performed even with respect to the mobile station whose quality is temporarily degraded. That is, the radio resources can be effectively used, thereby increasing the throughput.

A scheduler and a scheduling method in a tenth embodiment of the present invention are explained next. Since the configuration of this scheduler is the same as that shown in Fig. 1 according to the first embodiment, like reference signs denote like parts and explanation thereof is omitted.

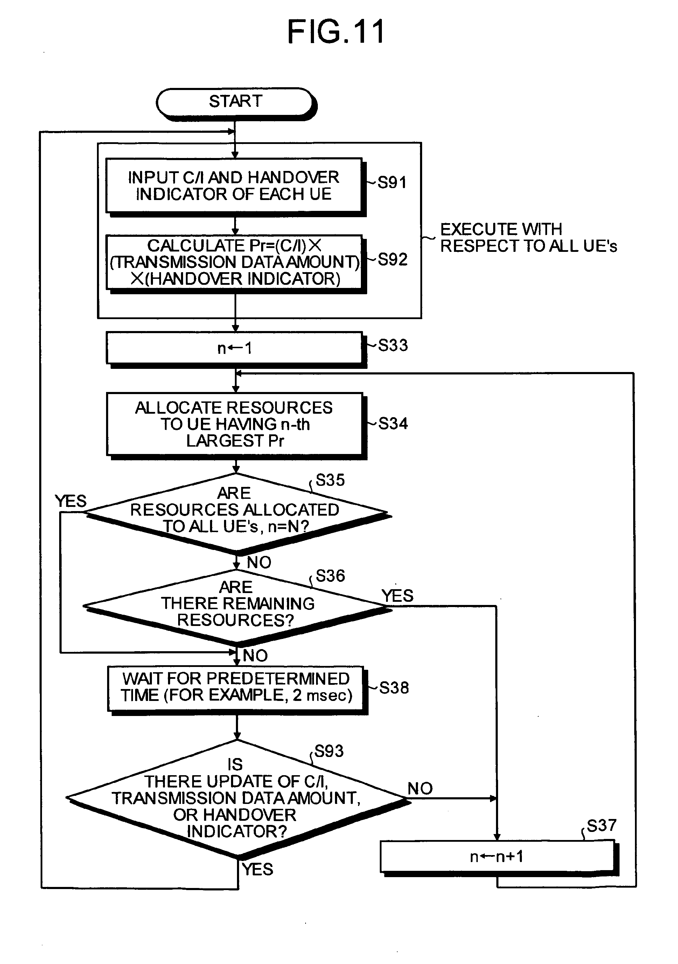

The scheduling method according to the tenth embodiment is explained in detail with reference to the drawing. Fig. 11 is a flowchart of the scheduling method according to the tenth embodiment. Only processing different from that in the fourth to the ninth embodiments is explained.

In the base station 1, the scheduler 12 periodically receives the instant C/I from the respective receivers #1 to #N (step S91), receives the handover indicator for each mobile station from the RNC (step S91), and receives the amount of the transmission data (transmission data amount) recorded in the transmission buffer (step S91).

The scheduler 12 calculates the priority (Pr) for each mobile station based on Equation (10) (step S92).

$$Pr=((instant~C/I)\times(transmission~data~amount)\times(handover~indicator) \qquad\qquad (10)$$

According to the tenth embodiment, after predetermined time (for example, 2 milliseconds) has passed since the radio resource allocation control is started with respect to the mobile station having the highest priority (n=1) (step S38), the scheduler 12 confirms whether the handover indicator, the instant C/I, or the transmission data amount has been updated (step S93). For example, when any one of these has not been updated ("No" at step S93), the processing from step S34 and onward is executed again sequentially from the mobile station having the next highest priority ((k+1) th) with respect to the mobile station (k-th: $1 \leq k<N$), for which the radio resource allocation control has been completed at a point in time when the predetermined time has passed (step S37). On the other hand, at step S93, when the handover indicator, the instant C/I, or the transmission data amount has been updated ("Yes" at step S93), the scheduler 12 executes the processing from step S91 and onward again.

Thus, according to the tenth embodiment, the radio resource allocation control is performed sequentially in order of high priority with respect to the mobile stations, which are not performing handover. At this time, the transmission data amount is reflected in the priority. Consequently, the radio resource allocation control is performed with respect to all the mobile stations, which are not performing handover. As a result, the radio resource allocation control is performed reliably even with respect to the mobile station whose quality is temporarily degraded. That is, the radio resources can be effectively used, thereby increasing the throughput.

A scheduler and a scheduling method in an eleventh embodiment of the present invention are explained next. Since the configuration of this scheduler is the same as that shown in Fig. 1 according to the first embodiment, like reference signs denote like parts and explanation thereof is omitted.

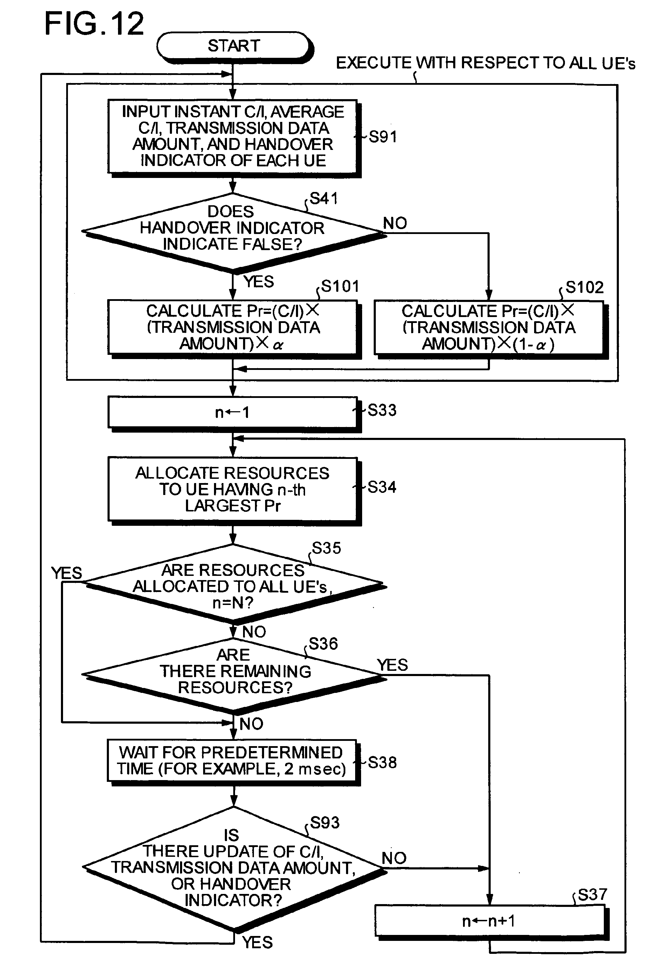

The scheduling method according to the eleventh embodiment is explained in detail with reference to the drawing. Fig. 12 is a flowchart of the scheduling method according to the eleventh embodiment. Only processing different from that in the fourth to the tenth embodiments is explained.

For example, the scheduler 12 confirms whether the handover indicator is "FALSE" for each mobile station, and calculates the priority (Pr) for the mobile station having the handover indicator "FALSE" ("Yes" at step S41) based on Equation (11) (step S101). On the other hand, the scheduler 12 calculates the priority (Pr) for the mobile station having the handover indicator "TRUE" ("No" at step S41) based on Equation (12) (step S102).

$$Pr=(instant\ C/I)\times(transmission\ data\ amount)\times\alpha \qquad (11)$$

$$Pr=(instant\ C/I)\times(transmission\ data\ amount)\times(1-\alpha) \qquad (12)$$

Thus, according to the eleventh embodiment, the radio resource allocation control is performed with respect to all mobile stations sequentially in order of high priority, so that the priority of the mobile station, which is not performing handover, is higher than the priority of the mobile station in the middle of performing handover. However, since the transmission data amount is reflected in the priority, the priority of the mobile station in the middle of performing handover can become high. As a result, the priority can be set to all mobile stations, and the radio resource allocation control is reliably performed even with respect to the mobile station whose quality is temporarily degraded. That is, the radio resources can be effectively used, thereby increasing the throughput.

In the scheduler 12 according to the fourth to the eleventh embodiments, transmission power value of the mobile station can be reflected in the priority. In this case, a calculating formula of the priority is created so that the priority becomes lower as the transmission power value increases (as the mobile station moves away from the base station 1).

In the scheduler 12 according to the first to the eleventh embodiments, the radio resource allocation control can be performed preferentially with respect to the mobile station in the middle of performing handover. In this case, communication can be continued even during handover.

According to the respective embodiments, the handover indicator is reflected in the priority of the round robin scheduler, the proportional fairness scheduler, or the MAXC/I scheduler. However, the scheduler is not limited thereto, and any scheduler that can reflect the handover indicator in the priority can be applied.

INDUSTRIAL APPLICABILITY

The scheduler and the scheduling method according to the present invention are useful for the radio resource allocation control in the radio communication system, and particularly suitable as a packet scheduler and a scheduling method for adaptively allocating the radio resources according to the communication environment.

**Claims**

1.  A scheduler that allocates wireless resources to mobile stations in a cell in a base station, wherein
    the scheduler allocates the wireless resource to all or a part of the mobile stations in the cell, based on handover information in a unit of mobile station indicating whether handover is being performed.

2.  A base station that allocates wireless resources to mobile stations in a local cell, the base station comprising:
    a scheduler unit that allocates the wireless resources to all or a part of the mobile stations in the cell, based on handover information in a unit of mobile station indicating whether handover is being performed.

3.  The base station according to claim 2, wherein
    the scheduler unit allocates the wireless resources by a round robin method to a mobile station with the handover information indicating that the handover is not performed.

4.  The base station according to claim 2, wherein
    the scheduler unit allocates the wireless resources by a round robin method to mobile stations with the handover information indicating that the handover is not performed, and thereafter, allocates the wireless resources by the round robin method to a mobile station with the handover information indicating that handover is being performed.

5.  The base station according to claim 2, wherein
    the scheduler unit allocates the wireless resources by a round robin method to mobile stations with the handover information indicating that the handover is not performed, and when there is no mobile station with the handover information indicating that the handover is not performed or when the wireless resources are left after completing allocation of the wireless resources to all of the mobile stations with the handover information indicating that the handover is not performed, allocates the wireless resources by the round robin method to a mobile station with the handover information indicating that handover is being performed.

**6.** The base station according to claim 2, wherein
the scheduler unit determines priority of a mobile station with the handover information indicating that the handover is not performed, based on instant channel quality information received regularly from the mobile stations in the cell and average channel quality information obtained by averaging the instant channel quality information for a predetermined period, and allocates the wireless resources to the mobile stations in order of the priority.

**7.** The base station according to claim 2, wherein
the scheduler unit determines priority of a mobile station with the handover information indicating that the handover is not performed, based on instant channel quality information received regularly from the mobile stations in the cell and average channel quality information obtained by averaging the instant channel quality information for a predetermined period, in such a manner that the priority of a mobile station with the handover information indicating that the handover is not performed becomes higher than the priority of a mobile station with the handover information indicating that handover is being performed, and allocates the wireless resources to the mobile stations in order of the priority.

**8.** The base station according to claim 6, wherein
the scheduler unit reflects an amount of transmission data accumulated in a transmission buffer of a corresponding mobile station when determining the priority of the mobile stations.

**9.** The base station according to claim 7, wherein
the scheduler unit reflects an amount of transmission data accumulated in a transmission buffer of a corresponding mobile station when determining the priority of the mobile stations.

**10.** The base station according to claim 2, wherein
the scheduler unit determines priority of all of the mobile stations with the handover information indicating that the handover is not performed, based on instant channel quality information received regularly from the mobile stations in the cell and average channel quality information obtained by averaging the instant channel quality information for a predetermined period, and allocates the wireless resources to the mobile stations in order of the priority.

**11.** The base station according to claim 2, wherein
the scheduler unit determines priority of all of the mobile stations with the handover information indicating that the handover is not performed, based on instant channel quality information received regularly from the mobile stations in the cell and average channel quality information obtained by averaging the instant channel quality information for a predetermined period, in such a manner that the priority of a mobile station with the handover information indicating that the handover is not performed becomes higher than the priority of a mobile station with the handover information indicating that handover is being performed, and allocates the wireless resources to the mobile stations in order of the priority.

**12.** The base station according to claim 10, wherein
the scheduler unit reflects an amount of transmission data accumulated in a transmission buffer of a corresponding mobile station when determining the priority of the mobile stations.

**13.** The base station according to claim 11, wherein
the scheduler unit reflects an amount of transmission data accumulated in a transmission buffer of a corresponding mobile station when determining the priority of the mobile stations.

**14.** A scheduling method for a base station to allocate wireless resources to mobile stations in a cell, the scheduling method comprising:

a wireless-resource allocating step of allocating the wireless resources to all or a part of the mobile stations in the cell, based on handover information in a unit of mobile station indicating whether handover is being performed.

**15.** The scheduling method according to claim 14, wherein the wireless-resource allocating step includes
allocating the wireless resources by a round robin method to a mobile station with the handover information indicating that the handover is not performed.

**16.** The scheduling method according to claim 14, wherein the wireless-resource allocating step includes allocating the wireless resources by a round robin method to mobile stations with the handover information indicating that the handover is not performed, and thereafter, allocating the wireless resources by the round robin method to a mobile station with the handover information indicating that handover is being performed.

**17.** The scheduling method according to claim 14, wherein the wireless-resource allocating step includes allocating the wireless resources by a round robin method to mobile stations with the handover information indicating that the handover is not performed, and when there is no mobile station with the handover information indicating that the handover is not performed or when the wireless resources are left after completing allocation of the wireless resources to all of the mobile stations with the handover information indicating that the handover is not performed, allocating the wireless resources by the round robin method to a mobile station with the handover information indicating that handover is being performed.

**18.** The scheduling method according to claim 14, wherein the wireless-resource allocating step includes determining priority of a mobile station with the handover information indicating that the handover is not performed, based on instant channel quality information received regularly from the mobile stations in the cell and average channel quality information obtained by averaging the instant channel quality information for a predetermined period; and
allocating the wireless resources to the mobile stations in order of the priority.

**19.** The scheduling method according to claim 14, wherein the wireless-resource allocating step includes determining priority of a mobile station with the handover information indicating that the handover is not performed, based on instant channel quality information received regularly from the mobile stations in the cell and average channel quality information obtained by averaging the instant channel quality information for a predetermined period, in such a manner that the priority of a mobile station with the handover information indicating that the handover is not performed becomes higher than the priority of a mobile station with the handover information indicating that handover is being performed; and
allocating the wireless resources to the mobile stations in order of the priority.

**20.** The scheduling method according to claim 18, wherein the wireless-resource allocating step includes reflecting an amount of transmission data accumulated in a transmission buffer of a corresponding mobile station when determining the priority of the mobile stations.

**21.** The scheduling method according to claim 19, wherein the wireless-resource allocating step includes reflecting an amount of transmission data accumulated in a transmission buffer of a corresponding mobile station when determining the priority of the mobile stations.

**22.** The scheduling method according to claim 14, wherein the wireless-resource allocating step includes determining priority of all of the mobile stations with the handover information indicating that the handover is not performed, based on instant channel quality information received regularly from the mobile stations in the cell and average channel quality information obtained by averaging the instant channel quality information for a predetermined period; and
allocating the wireless resources to the mobile stations in order of the priority.

**23.** The scheduling method according to claim 14, wherein the wireless-resource allocating step includes determining priority of all of the mobile stations with the handover information indicating that the handover is not performed, based on instant channel quality information received regularly from the mobile stations in the cell and average channel quality information obtained by averaging the instant channel quality information for a predetermined period, in such a manner that the priority of a mobile station with the handover information indicating that the handover is not performed becomes higher than the priority of a mobile station with the handover information indicating that handover is being performed; and
allocating the wireless resources to the mobile stations in order of the priority.

**24.** The scheduling method according to claim 22, wherein the wireless-resource allocating step includes reflecting an amount of transmission data accumulated in a transmission buffer of a corresponding mobile station when determining the priority of the mobile stations.

**25.** The scheduling method according to claim 23, wherein the wireless-resource allocating step includes

reflecting an amount of transmission data accumulated in a transmission buffer of a corresponding mobile station when determining the priority of the mobile stations.

# FIG.1

TRANSMITTER

MOBILE STATION #N

MOBILE STATION #3

MOBILE STATION #2

MOBILE STATION #1

13-3

13-N

13-2

13-1

TF RC | TF RC | TF RC | ... | TF RC

HANDOVER INDICATOR #1, #2, #3,···, #N

SCHEDULER

12

C/I | C/I | C/I | ··· | C/I

11-3

11-N

RECEIVER

MOBILE STATION #N

MOBILE STATION #3

MOBILE STATION #2

MOBILE STATION #1

11-2

11-1

# FIG.2

```
                              ┌──────────────┐
                              │    START     │
                              └──────────────┘
                                     │            EXECUTE WITH RESPECT TO ALL UE's
                                     ▼
              ┌──────────────────────────────────────┐
              │            IS                    S1   │
              │      HANDOVER INDICATOR      NO       │
              │           FALSE?          ──────►     │
              │                                       │
              │           YES                    ┌────────────────────────┐
              │            │                     │ REMOVE CORRESPONDING S2 │
              │            │                     │  UE FROM TARGET FOR     │
              │            │                     │    ROUND ROBIN          │
              │            │                     │    SCHEDULING           │
              │            │                     └────────────────────────┘
              └────────────────────────────────────────┘
                           │
                           ▼
              ┌────────────────────────┐
              │   PERFORM ROUND        │  S3
              │   ROBIN SCHEDULING     │
              └────────────────────────┘
                           │
                           ▼
              ┌────────────────────────┐
              │ WAIT FOR PREDETERMINED │  S4
              │ TIME (FOR EXAMPLE, 2 msec) │
              └────────────────────────┘
                           │
                           ▼
              ┌────────────────────────────┐
              │       IS THERE          S5  │  NO
              │  UPDATE OF HANDOVER      ──────►
              │      INDICATOR?             │
              └────────────────────────────┘
                           │
                          YES
```

IS HANDOVER INDICATOR FALSE? — S1
NO
YES
REMOVE CORRESPONDING UE FROM TARGET FOR ROUND ROBIN SCHEDULING — S2
EXECUTE WITH RESPECT TO ALL UE's
PERFORM ROUND ROBIN SCHEDULING — S3
WAIT FOR PREDETERMINED TIME (FOR EXAMPLE, 2 msec) — S4
IS THERE UPDATE OF HANDOVER INDICATOR? — S5
NO
YES

# FIG.3

```
                    ┌─────────────────┐
                    │      START      │
                    └─────────────────┘
                             │
                             ▼
              ┌──────────────────────────┐
              │      INPUT HANDOVER       │  S11
              │        INDICATOR          │
              └──────────────────────────┘
                             │
                             ▼
              ┌──────────────────────────┐
              │    PERFORM ROUND ROBIN    │  S12
              │        SCHEDULING         │
              └──────────────────────────┘
                             │
                             ▼
              ┌──────────────────────────┐
              │ WAIT FOR PREDETERMINED TIME│ S4
              │   (FOR EXAMPLE, 2 msec)   │
              └──────────────────────────┘
                             │
                             ▼
                          S5
                    ╱─────────────╲
                   ╱ IS THERE UPDATE ╲   NO
                  ╱  OF HANDOVER      ╲──────
                   ╲  INDICATOR?      ╱
                    ╲───────────────╱
                          YES
```

# FIG.4

```
                    ┌──────────────┐
                    │    START     │
                    └──────┬───────┘
                           │
       ┌───────────────────┤
       │                   ▼
       │       ┌───────────────────────────┐
       │       │ INPUT HANDOVER INDICATOR   │──S11
       │       └───────────┬───────────────┘
       │                   │
       │      ┌────────────┤◀──────────────────┐
       │      │            ▼                    │
       │      │  ┌───────────────────────┐      │
       │      │  │  PERFORM ROUND ROBIN   │──S21 │
       │      │  │     SCHEDULING         │      │
       │      │  └───────────┬───────────┘      │
       │                     │                  │
       │       ┌─────────────────────────────┐  │
       │       │ WAIT FOR PREDETERMINED TIME  │──S4
       │       │ (FOR EXAMPLE, 2 msec)        │  │
       │       └─────────────┬───────────────┘  │
       │                     │                  │
       │                     ▼        S5         │
       │              ╱─────────────╲            │
       │             ╱ IS THERE UPDATE╲    NO     │
       │             ╲ OF HANDOVER    ╱──────────┘
       │              ╲ INDICATOR?   ╱
       │               ╲───────────╱
       │                    │YES
       └────────────────────┘
```

# FIG.5

START

INPUT INSTANT C/I, AVERAGE C/I, AND HANDOVER INDICATOR OF EACH UE — S31

CALCULATE Pr= ((INSTANT C/I)/ (AVERAGE C/I))× (HANDOVER INDICATOR) — S32

EXECUTE WITH RESPECT TO ALL UE's

n←1 — S33

ALLOCATE RESOURCES TO UE HAVING n-th LARGEST Pr — S34

ARE RESOURCES ALLOCATED TO ALL UE's, n=N? — S35 — YES

NO

ARE THERE REMAINING RESOURCES? — S36 — YES

NO

WAIT FOR PREDETERMINED TIME (FOR EXAMPLE, 2 msec) — S38

IS THERE UPDATE OF INSTANT C/I, AVERAGE C/I, OR HANDOVER INDICATOR? — S39 — NO

YES

n←n+1 — S37

# FIG.6

START

EXECUTE WITH RESPECT TO ALL UE's

INPUT INSTANT C/I,
AVERAGE C/I, AND
HANDOVER INDICATOR
OF EACH UE ~S31

DOES
HANDOVER INDICATOR
INDICATE FALSE? S41

NO

YES

CALCULATE Pr=
((INSTANT C/I)/
(AVERAGE C/I))×α S42

CALCULATE Pr=
((INSTANT C/I)/
(AVERAGE C/I))×(1-α) S43

n←1 ~S33

ALLOCATE RESOURCES
TO UE HAVING n-th
LARGEST Pr ~S34

ARE RESOURCES
ALLOCATED TO ALL UE's,
n=N? S35

YES

NO

ARE
THERE REMAINING
RESOURCES? S36

YES

NO

WAIT FOR PREDETERMINED
TIME (FOR EXAMPLE, 2 msec) ~S38

IS
THERE UPDATE OF
INSTANT C/I, AVERAGE C/I,
OR HANDOVER
INDICATOR? S39

NO

YES

n←n+1 S37

# FIG.7

```
                    ┌─────────────┐
                    │    START    │
                    └─────────────┘
                           │
        ┌──────────────────────────────────┐
        │  INPUT INSTANT C/I,               │
        │  AVERAGE C/I, TRANSMISSION        │  S51
        │  DATA AMOUNT, AND                 │
        │  HANDOVER INDICATOR               │
        │  OF EACH UE                       │
        └──────────────────────────────────┘        EXECUTE WITH
                           │                          RESPECT TO ALL UE's
        ┌──────────────────────────────────┐
        │  CALCULATE Pr=                    │
        │  ((INSTANT C/I)/(AVERAGE C/I))    │  S52
        │  ×(TRANSMISSION                   │
        │  DATA AMOUNT)×                    │
        │  (HANDOVER INDICATOR)             │
        └──────────────────────────────────┘
                           │
              ┌────────────────────────┐
              │         n←1            │  S33
              └────────────────────────┘
                           │
              ┌────────────────────────┐
              │  ALLOCATE RESOURCES    │
              │  TO UE HAVING n-th     │  S34
              │  LARGEST Pr            │
              └────────────────────────┘
                           │
                          S35
                   ╱ ARE           ╲     YES
                  ╱ RESOURCES ALLOCATED ╲──────
                  ╲ TO ALL UE's, n=N?  ╱
                   ╲               ╱
                        │ NO
                          S36
                   ╱ ARE          ╲      YES
                  ╱  THERE REMAINING ╲──────────
                  ╲   RESOURCES?    ╱
                   ╲              ╱
                        │ NO
              ┌────────────────────────┐
              │ WAIT FOR PREDETERMINED │  S38
              │ TIME (FOR EXAMPLE, 2 msec)│
              └────────────────────────┘
                           │
                          S53
                   ╱   IS             ╲
                  ╱  THERE UPDATE      ╲    NO
                 ╱ OF INSTANT C/I, AVERAGE C/I,╲──────
                 ╲ TRANSMISSION DATA AMOUNT,   ╱
                  ╲  OR HANDOVER      ╱
                   ╲  INDICATOR?     ╱
                        │ YES
                                          S37
                              ┌────────────────────┐
                              │      n←n+1          │
                              └────────────────────┘
```

# FIG.8

```
                    START          EXECUTE WITH RESPECT TO ALL UE's
```

**INPUT INSTANT C/I, AVERAGE C/I, TRANSMISSION DATA AMOUNT, AND HANDOVER INDICATOR OF EACH UE** — S51

**DOES HANDOVER INDICATOR INDICATE FALSE?** — S41

YES → S61: **CALCULATE Pr= ((INSTANT C/I)/(AVERAGE C/I)) ×(TRANSMISSION DATA AMOUNT)×$\alpha$**

NO → S62: **CALCULATE Pr= ((INSTANT C/I)/(AVERAGE C/I)) ×(TRANSMISSION DATA AMOUNT)×(1-$\alpha$)**

**n←1** — S33

**ALLOCATE RESOURCES TO UE HAVING n-th LARGEST Pr** — S34

**ARE RESOURCES ALLOCATED TO ALL UE's, n=N?** — S35 (YES / NO)

**ARE THERE REMAINING RESOURCES?** — S36 (YES / NO)

**WAIT FOR PREDETERMINED TIME (FOR EXAMPLE, 2 msec** — S38

**IS THERE UPDATE OF INSTANT C/I, AVERAGE C/I, OR HANDOVER INDICATOR?** — S53 (NO / YES)

**n←n+1** — S37

21

# FIG.9

START

INPUT C/I AND HANDOVER INDICATOR OF EACH UE — S71

CALCULATE Pr=(C/I)× (HANDOVER INDICATOR) — S72

EXECUTE WITH RESPECT TO ALL UE's

n←1 — S33

ALLOCATE RESOURCES TO UE HAVING n-th LARGEST Pr — S34

ARE RESOURCES ALLOCATED TO ALL UE's, n=N? — S35
YES
NO

ARE THERE REMAINING RESOURCES? — S36
YES
NO

WAIT FOR PREDETERMINED TIME (FOR EXAMPLE, 2 msec) — S38

IS THERE UPDATE OF C/I OR HANDOVER INDICATOR? — S73
NO
YES

n←n+1 — S37

# FIG.10

START

EXECUTE WITH RESPECT TO ALL UE's

INPUT C/I AND HANDOVER INDICATOR OF EACH UE — S71

DOES HANDOVER INDICATOR INDICATE FALSE? — S41

NO

YES

CALCULATE Pr=(C/I)×α — S81

CALCULATE Pr=(C/I)×(1-α) — S82

$n \leftarrow 1$ — S33

ALLOCATE RESOURCES TO UE HAVING n-th LARGEST Pr — S34

ARE RESOURCES ALLOCATED TO ALL UE's, n=N? — S35

YES

NO

ARE THERE REMAINING RESOURCES? — S36

YES

NO

WAIT FOR PREDETERMINED TIME (FOR EXAMPLE, 2 msec) — S38

IS THERE UPDATE OF C/I OR HANDOVER INDICATOR? — S73

NO

YES

$n \leftarrow n+1$ — S37

23

# FIG.11

```
                    ┌─────────────┐
                    │    START    │
                    └──────┬──────┘
                           │
        ┌──────────────────┼───────────────────────┐
        │   ┌──────────────▼──────────────┐         │
        │   │  INPUT C/I AND HANDOVER     │ ~S91    │
        │   │  INDICATOR OF EACH UE       │         │      EXECUTE WITH
        │   └──────────────┬──────────────┘         │ ~    RESPECT TO ALL UE's
        │   ┌──────────────▼──────────────┐         │
        │   │  CALCULATE Pr=(C/I)×        │         │
        │   │  (TRANSMISSION DATA AMOUNT) │ ~S92    │
        │   │  ×(HANDOVER INDICATOR)      │         │
        │   └──────────────┬──────────────┘         │
        └──────────────────┼───────────────────────┘
                    ┌───────▼──────┐
                    │     n←1      │ ~S33
                    └───────┬──────┘
                           │
                    ┌───────▼──────────┐
                    │  ALLOCATE RESOURCES │ ~S34
                    │  TO UE HAVING n-th  │
                    │  LARGEST Pr         │
                    └───────┬──────────┘
```

- INPUT C/I AND HANDOVER INDICATOR OF EACH UE — S91
- CALCULATE Pr=(C/I)×(TRANSMISSION DATA AMOUNT)×(HANDOVER INDICATOR) — S92
- EXECUTE WITH RESPECT TO ALL UE's
- n←1 — S33
- ALLOCATE RESOURCES TO UE HAVING n-th LARGEST Pr — S34
- ARE RESOURCES ALLOCATED TO ALL UE's, n=N? — S35 — YES / NO
- ARE THERE REMAINING RESOURCES? — S36 — YES / NO
- WAIT FOR PREDETERMINED TIME (FOR EXAMPLE, 2 msec) — S38
- IS THERE UPDATE OF C/I, TRANSMISSION DATA AMOUNT, OR HANDOVER INDICATOR? — S93 — NO / YES
- n←n+1 — S37

24

# FIG.12

START

EXECUTE WITH RESPECT TO ALL UE's

INPUT INSTANT C/I, AVERAGE C/I, TRANSMISSION DATA AMOUNT, AND HANDOVER INDICATOR OF EACH UE  — S91

DOES HANDOVER INDICATOR INDICATE FALSE?  — S41

NO →

YES ↓

CALCULATE $Pr=(C/I)\times$ (TRANSMISSION DATA AMOUNT)$\times\alpha$  — S101

CALCULATE $Pr=(C/I)\times$ (TRANSMISSION DATA AMOUNT)$\times(1-\alpha)$  — S102

$n \leftarrow 1$  — S33

ALLOCATE RESOURCES TO UE HAVING n-th LARGEST Pr  — S34

ARE RESOURCES ALLOCATED TO ALL UE's, n=N?  — S35

YES

NO ↓

ARE THERE REMAINING RESOURCES?  — S36

YES →

NO ↓

WAIT FOR PREDETERMINED TIME (FOR EXAMPLE, 2 msec)  — S38

IS THERE UPDATE OF C/I, TRANSMISSION DATA AMOUNT, OR HANDOVER INDICATOR?  — S93

NO →

$n \leftarrow n+1$  — S37

YES

25

# EP 1 727 382 A1

## INTERNATIONAL SEARCH REPORT

| International application No. |
|---|
| PCT/JP2004/002366 |

### A. CLASSIFICATION OF SUBJECT MATTER
Int.Cl⁷ H04Q7/38

According to International Patent Classification (IPC) or to both national classification and IPC

### B. FIELDS SEARCHED

Minimum documentation searched (classification system followed by classification symbols)
Int.Cl⁷ H04B7/24-7/26, H04Q7/00-7/38, H04B7/216, H04J13/00-13/06

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | EP 0955781 A2 (NEC CORP.),<br>10 November, 1999 (10.11.99),<br>Par. Nos. [0016] to [0023]<br>& JP 11-317973 A     & US 6529733 A | 1,2,14<br>3-13,15-25 |
| A | GB 2343593 A (Samsung Electronics Co., Ltd.),<br>10 May, 2000 (10.05.00),<br>Page 3, line 11 to page 4, line 14<br>& JP 12-115835 A | 1-25 |
| A | EP 1296475 A1 (MATSUSHITA ELECTRIC INDUSTRIAL<br>CO., LTD.),<br>26 March, 2003 (26.03.03),<br>Par. Nos. [0002] to [0016]<br>& WO 2075994 A1     & US 2003-139178 A | 3-5,15-17 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 June, 2004 (02.06.04) | Date of mailing of the international search report<br>15 June, 2004 (15.06.04) |
|---|---|
| Name and mailing address of the ISA/<br>Japanese Patent Office | Authorized officer |
| Facsimile No. | Telephone No. |

Form PCT/ISA/210 (second sheet) (January 2004)

26

**INTERNATIONAL SEARCH REPORT**

International application No.

PCT/JP2004/002366

C (Continuation). DOCUMENTS CONSIDERED TO BE RELEVANT

| Category* | Citation of document, with indication, where appropriate, of the relevant passages | Relevant to claim No. |
|---|---|---|
| A | WO 01/99451 A1 (UNIVERSITY OF SURRY), 27 December, 2001 (27.12.01), Claims 1 to 2 & JP 2004-501588 A & EP 1293192 A | 6,7,10,11, 18,19,22,23 |
| A | JP 2002-152228 A (Sony Corp.), 24 May, 2002 (24.05.02), Par. No. [0239] (Family: none) | 8,9,12,13, 20,21,24,25 |

Form PCT/ISA/210 (continuation of second sheet) (January 2004)